(19) **Europäisches Patentamt / European Patent Office / Office européen des brevets**

(11) **EP 2 439 604 B1**

(12) **FASCICULE DE BREVET EUROPEEN**

(45) Date de publication et mention
de la délivrance du brevet:
**30.04.2014   Bulletin 2014/18**

(51) Int Cl.:
***G05D 1/00*** (2006.01)

(21) Numéro de dépôt: **11182005.6**

(22) Date de dépôt: **20.09.2011**

(54) **Procédé de gestion d'un mouvement au sol d'un aéronef.**

Steuerverfahren für die Bewegung eines Flugzeugs am Boden

Method for managing a ground movement of an aircraft.

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.09.2010   FR 1057576**

(43) Date de publication de la demande:
**11.04.2012   Bulletin 2012/15**

(73) Titulaire: **Messier-Bugatti-Dowty
78140 Velizy Villacoublay (FR)**

(72) Inventeurs:
• **Lemay, David
  92370 CHAVILLE (FR)**
• **Frank, David
  75013 PARIS (FR)**
• **Basset, Michel
  68990 HEIMSBRUNN (FR)**
• **Chamaillard, Yann
  45130 LE BARDON (FR)**

(74) Mandataire: **Parzy, Benjamin Alain et al
Cabinet Boettcher
16, rue Médéric
75017 Paris (FR)**

(56) Documents cités:
**WO-A1-2006/134257     NL-C2- 2 001 846
US-A- 4 482 961**

## Description

L'invention concerne un procédé de gestion d'un mouvement au sol d'un aéronef.

On rappelle qu'un aéronef comporte un train d'atterrissage, qui comporte plusieurs atterrisseurs, dans le but d'assurer une interface entre l'aéronef et le sol.

### ARRIERE PLAN TECHNOLOGIQUE DE L'INVENTION

Habituellement, un pilote contrôle un mouvement au sol d'un aéronef en agissant sur différents organes de pilotage (pédales d'un palonnier, volant de commande ...). Pour réaliser le mouvement souhaité, le pilote doit en permanence gérer les organes de pilotage ce qui représente une lourde charge de travail.

Il est ainsi connu des procédés visant à aider le pilote à gérer le mouvement au sol d'un aéronef, l'aéronef comportant au moins un atterrisseur principal gauche et un atterrisseur principal droit qui comportent chacun des roues associées à des organes d'application de couple. A cet effet, à partir d'une consigne d'accélération longitudinale et/ou une consigne de vitesse angulaire générées par un ou plusieurs des organes de pilotage, on détermine pour chacun des organes d'application de couple, une consigne de couple unitaire à appliquer à la roue associée de sorte que l'ensemble des consignes de couple unitaire permettent à l'aéronef de répondre à la consigne d'accélération longitudinale et/ou à la consigne de vitesse angulaire.

WO 2006134257 divulgue un tel procédé de l'art antérieur.

Ainsi le pilote n'a plus qu'à gérer des organes de pilotage sans se soucier de la façon dont la ou les consignes sont réparties pour agir sur le mouvement de l'aéronef. Toutefois, dans de tels procédés, on s'approche au plus près de la consigne d'accélération longitudinale et/ou de la consigne de vitesse angulaire de l'aéronef à l'aide d'une boucle de régulation qui compare la consigne d'accélération longitudinale et/ou la consigne de vitesse angulaire à respectivement l'accélération longitudinale et/ou la vitesse angulaire réelles de l'aéronef. Or, la boucle de régulation englobe de nombreux composants et notamment tous les organes d'application de couple. Pour contrôler suffisamment finement chacun des composants englobés dans ladite boucle, des lois de commande complexes doivent être utilisées. Cet inconvénient est encore augmenté sur un aéronef de taille importante.

En outre, de tels procédés s'avèrent difficilement adaptables d'une configuration d'aéronef à une autre : pour un seul changement de configuration (un atterrisseur supplémentaire, une roue par atterrisseur équipée d'un organe d'application de couple supplémentaire ...), toutes les lois de commande nécessaires à la répartition de la consigne d'accélération longitudinale et/ou la consigne de vitesse angulaire sur chacun des organes d'application de couple doivent être recalculées.

### OBJET DE L'INVENTION

Un but de l'invention est de proposer un procédé de gestion d'un mouvement au sol d'un aéronef obviant aux inconvénients précités.

### BREVE DESCRIPTION DE L'INVENTION

En vue de la réalisation de ce but, on propose un procédé de gestion d'un mouvement au sol d'un aéronef, l'aéronef comportant au moins un atterrisseur principal gauche et un atterrisseur principal droit qui comportent chacun des roues associées à des organes d'application de couple pour appliquer un couple sur les roues en réponse à une consigne générale, la consigne générale se décomposant en une consigne d'accélération longitudinale et une consigne de vitesse angulaire.

Selon l'invention, le procédé comporte les étapes successives de :

- à partir de la consigne générale, déterminer pour chacun des atterrisseurs une consigne d'accélération d'atterrisseur de sorte que l'ensemble des consignes d'accélération d'atterrisseur permettent de répondre à la consigne générale ;
- pour chacun des atterrisseurs, déterminer à partir de la consigne d'accélération d'atterrisseur et pour chacune des roues dudit atterrisseur, une consigne d'accélération de roue de sorte que l'ensemble des consignes d'accélération de roue correspondent à la consigne d'accélération d'atterrisseur;
- pour chacune des roues, déterminer à partir de la consigne d'accélération de roue une consigne de couple général à engendrer par l'organe d'application de couple associé à ladite roue de sorte que la consigne de couple général permette de répondre à la consigne d'accélération de roue et de sorte que l'ensemble des couples appliqués aux roues par les organes d'application de couple en réponse aux consignes de couple général permettent à l'aéronef de répondre à la consigne générale.

Un train d'atterrissage d'un aéronef est ainsi hiérarchisé en différents niveaux : aéronef, atterrisseur et roue. Une telle architecture modulaire du train d'atterrissage offre une grande adaptabilité aux différentes configurations possibles d'aéronef : il n'est plus nécessaire de reprendre toutes les lois de commande utiles à la répartition de la consigne générale de l'aéronef mais seulement celles du niveau concerné.

En outre, une boucle de régulation est présente à chaque niveau hiérarchique du train d'atterrissage : chaque organe d'application de couple du train d'atterrissage est ainsi contrôlé localement ce qui simplifie grandement les lois de commande utilisées.

BREVE DESCRIPTION DES DESSINS

L'invention sera mieux comprise à la lumière de la description qui suit d'un mode de réalisation particulier non limitatif de l'invention en référence aux figures ci-jointes parmi lesquelles :

- la figure 1 est un schéma de mise en oeuvre du procédé selon l'invention à un premier niveau hiérarchique de commande d'un train d'atterrissage;
- les figures 2a et 2b sont des schémas de mise en oeuvre, à un deuxième niveau hiérarchique inférieur à celui de la figure 1, du procédé de l'invention;
- la figure 3 est un schéma de mise en oeuvre, à un troisième niveau hiérarchique inférieur à celui des figures 2a et 2b, du procédé de l'invention ;
- la figure 4 est un schéma de mise en oeuvre, à un quatrième niveau hiérarchique inférieur à celui de la figure 3, du procédé de l'invention.
- la figure 5 est un schéma de mise en oeuvre, à un quatrième niveau hiérarchique inférieur à celui de la figure 3, du procédé de l'invention selon un autre mode de réalisation.

DESCRIPTION DETAILLEE DE L'INVENTION

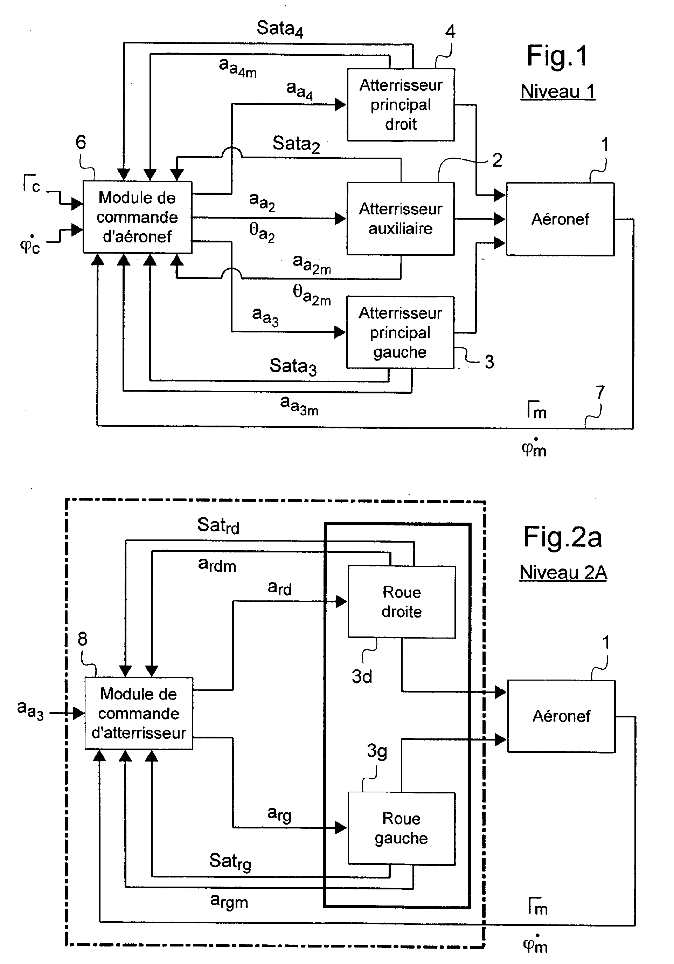

En référence aux figures 1 à 3, le procédé selon l'invention est ici détaillé en application à un aéronef 1 comportant un train d'atterrissage comportant au moins un atterrisseur auxiliaire 2 situé à l'avant de l'aéronef et au moins un atterrisseur principal gauche 3 et un atterrisseur principal droit 4.

Un pilote souhaitant faire réaliser un mouvement au sol à l'aéronef 1 agit sur différents organes de pilotage (comme des pédales de palonnier ou un volant de commande) pour générer une consigne générale se décomposant en une consigne d'accélération longitudinale $\Gamma_c$ et une consigne de vitesse angulaire $\dot{\varphi}_c$.

Chaque atterrisseur 2, 3, 4 de l'aéronef 1 comporte ici une roue gauche et une roue droite respectivement 2g et 2d, 3g et 3d (les roues de l'atterrisseur principal droit étant non illustrées ici) associée chacune à un organe d'application de couple pour appliquer un couple sur les roues en réponse à la consigne d'accélération longitudinale $\Gamma_c$ de l'aéronef 1. En outre, les organes d'application de couple des roues de l'atterrisseur principal gauche 3 et droit 4 peuvent également appliquer un couple sur les roues pour créer un différentiel de vitesse de rotation entre les roues de l'atterrisseur principal gauche 3 et celles de l'atterrisseur principal droit 4 en réponse à la consigne de vitesse angulaire $\dot{\varphi}_c$ de l'aéronef 1. Selon l'invention, l'atterrisseur auxiliaire 2 comporte ici un dispositif d'orientation 5 pour orienter la partie basse de l'atterrisseur auxiliaire 2 en réponse également à la consigne de vitesse angulaire $\dot{\varphi}_c$ de l'aéronef 1.

En référence à la figure 1, au premier niveau hiérarchique de commande du train d'atterrissage (niveau 1 ou niveau aéronef), à partir de la consigne générale ($\Gamma_c$, $\dot{\varphi}_c$), un module de commande d'aéronef 6 détermine simultanément une consigne d'accélération d'atterrisseur $a_{a2}$, $a_{a3}$, $a_{a4}$ pour chacun des atterrisseurs 2, 3, 4 ainsi qu'une consigne d'angle de braquage d'atterrisseur $\theta_{a2}$ pour l'atterrisseur auxiliaire 2 de sorte que l'ensemble des consignes d'accélération d'atterrisseur $a_{a2}$, $a_{a3}$, $a_{a4}$ et la consigne d'angle de braquage $\theta_{a2}$ permettent de répondre à la consigne générale ($\Gamma_c$, $\dot{\varphi}_c$).

De façon connue en soi, dans certaines circonstances (piste humide, moyens d'accélération défectueux...), il se peut que l'un ou plusieurs atterrisseurs ne puissent générer qu'une accélération limitée empêchant de réaliser la consigne d'accélération d'atterrisseur correspondante. Dans ce cas, un signal de saturation $Sat_{a2}$, $Sat_{a3}$, $Sat_{a4}$ est envoyé par l'atterrisseur auxiliaire 2 ou par l'atterrisseur principal gauche 3 ou droit 4 concerné au module de commande d'aéronef 6 qui tient alors compte de cette saturation pour déterminer des consignes d'accélération d'atterrisseur $a_{a2}$, $a_{a3}$, $a_{a4}$ et une consigne d'angle de braquage $\theta_{a2}$ permettant de répondre au mieux à la consigne générale ($\Gamma_c$, $\dot{\varphi}_c$).

Selon l'invention, à tout instant du mouvement au sol de l'aéronef 1, des mesures de paramètres représentatifs du mouvement de l'aéronef 1 sont effectuées, par exemple une mesure de la vitesse angulaire $\dot{\varphi}_m$ réelle et de l'accélération longitudinale réelle $\Gamma_m$ de l'aéronef 1. A partir de la vitesse angulaire mesurée $\dot{\varphi}_m$ et de l'accélération longitudinale mesurée $\Gamma_m$, le module de commande d'aéronef 6 détermine les consignes d'accélération d'atterrisseur $a_{a2}$, $a_{a3}$, $a_{a4}$ ainsi que la consigne d'angle de braquage d'atterrisseur $\theta_{a2}$ en tenant compte d'une erreur entre la consigne de vitesse angulaire $\dot{\varphi}_c$ et la vitesse angulaire mesurée $\dot{\varphi}_m$ ainsi qu'une erreur entre la consigne d'accélération longitudinale $\Gamma_c$ et l'accélération longitudinale mesurée $\Gamma_m$, les consignes d'accélération longitudinale $\Gamma_c$ et d'accélération angulaire $\dot{\varphi}_c$ étant traitées simultanément par le module de commande d'aéronef 6. Par une régulation 7 des accélérations d'atterrisseurs $a_{a2}$, $a_{a3}$, $a_{a4}$ ainsi que de l'angle de braquage $\theta_{a2}$ de l'atterrisseur auxiliaire 2, on obtient un mouvement au sol de l'aéronef 1 conforme à la consigne générale ($\Gamma_c$, $\dot{\varphi}_c$), au moins dans des conditions normales de fonctionnement des atterrisseurs 2, 3, 4.

Selon un mode de réalisation privilégié, à tout instant du mouvement au sol de l'aéronef 1, une mesure de l'angle de braquage d'atterrisseur $\theta_{a2m}$ est effectuée. A partir de l'angle de braquage d'atterrisseur mesuré $\theta_{a2m}$, le module de commande d'aéronef 6 détermine la consigne d'angle de braquage d'atterrisseur $\theta_{a2}$ en tenant compte d'une erreur entre la consigne d'angle de braquage d'atterrisseur $\theta_{a2}$ et l'angle de braquage mesuré $\theta_{a2m}$. Par une régulation de l'angle de braquage d'atterrisseur $\theta_{a2}$, on obtient un angle de braquage conforme à la consigne d'angle de braquage sans que la première régulation 7 n'intègre directement l'erreur entre la consigne d'angle de braquage d'atterrisseur $\theta_{a2}$ et l'angle de braquage d'atterrisseur mesuré $\theta_{a2m}$. D'une façon similaire, à tout instant du mouvement au sol de l'aéronef 1, une estimation des accélérations d'atterrisseur $a_{a2m}$, $a_{a3m}$, $a_{a4m}$ de chacun des atterrisseurs est effectuée à partir de diverses mesures de paramètres représentatifs du mouvement de l'aéronef 1 : vitesse de rotation des roues des atterrisseurs, vitesse angulaire de l'aéronef... A partir des accélérations d'atterrisseurs estimées, le module de commande d'aéronef 6 détermine les consignes d'accélération d'atterrisseur $a_{a2}$, $a_{a3}$, $a_{a4}$ en tenant compte d'une erreur entre les consignes d'accélération d'atterrisseur $a_{a2}$, $a_{a3}$, $a_{a4}$ et les accélérations d'atterrisseur estimées $a_{a2m}$, $a_{a3m}$, $a_{a4m}$.

Le procédé selon l'invention permet ainsi de gérer de façon simultanée à la fois l'orientation de la partie basse de l'atterrisseur auxiliaire 2, le différentiel de vitesses de rotation des atterrisseurs principaux 3, 4 ainsi que l'accélération longitudinale de chacun des atterrisseurs 2, 3, 4. Ceci allège la charge de travail du pilote qui n'a plus qu'à gérer les organes de pilotage sans se soucier de la façon dont la consigne générale ($\Gamma_c$, $\dot{\varphi}_c$) est répartie pour agir sur les atterrisseurs 2, 3, 4 de sorte que l'aéronef 1 réalise le mouvement au sol requis.

Selon l'invention, le train d'atterrissage est également commandé à un deuxième niveau hiérarchique. En référence à la figure 2a, le niveau 2A (ou niveau atterrisseur à partie basse non orientable) est illustré en application à l'atterrisseur principal gauche 3. L'atterrisseur principal droit 4, dont la partie basse est également non orientable, est géré de façon identique à l'atterrisseur principal gauche 3.

Un module de commande d'atterrisseur 8 reçoit du niveau 1 la consigne d'accélération d'atterrisseur $a_{a3}$. A partir de la consigne d'accélération d'atterrisseur $a_{a3}$, le module de commande d'atterrisseur 8 détermine simultanément une consigne d'accélération de roue $a_{rd}$, $a_{rg}$ pour chacune des roues 3d, 3g de l'atterrisseur principal gauche 3 de sorte que l'ensemble des consignes d'accélération de roue $a_{rd}$, $a_{rg}$ correspondent à la consigne d'accélération d'atterrisseur $a_{a3}$.

Identiquement au niveau 1, un signal de saturation $Sat_{rd}$, $Sat_{rg}$ est envoyé par la roue droite 3d ou par la roue gauche 3g concernée au module de commande d'atterrisseur 8 si une ou plusieurs roues ne peut générer qu'une accélération limitée empêchant de réaliser la consigne d'accélération de roue correspondante, le module de commande d'atterrisseur 8 tenant alors compte de cette saturation pour déterminer les consignes d'accélération de roue $a_{rd}$, $a_{rg}$ permettant de s'approcher au mieux de la consigne d'accélération d'atterrisseur $a_{a3}$.

Identiquement au niveau 1, à tout instant du mouvement au sol de l'aéronef 1, des mesures de paramètres représentatifs du mouvement des roues sont effectuées, par exemple une mesure des vitesses de rotation des roues à partir desquelles sont estimées les accélérations $a_{rdm}$, $a_{rgm}$ de chacune des roues. A partir de ces estimations d'accélération de roue, le module de commande d'atterrisseur 8 détermine les consignes d'accélération de roue $a_{rd}$, $a_{rg}$ en tenant compte d'une erreur entre les consignes d'accélération de roue $a_{rd}$, $a_{rg}$ et les accélérations de roue estimées $a_{rdm}$, $a_{rgm}$.

Selon un mode de réalisation privilégié, le module de commande d'atterrisseur 8 acquiert également la vitesse angulaire mesurée $\dot{\varphi}_m$ et l'accélération longitudinale mesurée $\Gamma_m$ afin de déterminer les consignes d'accélération de roue $a_{rd}$, $a_{rg}$ en tenant compte du comportement de l'aéronef par rapport au mouvement au sol requis.

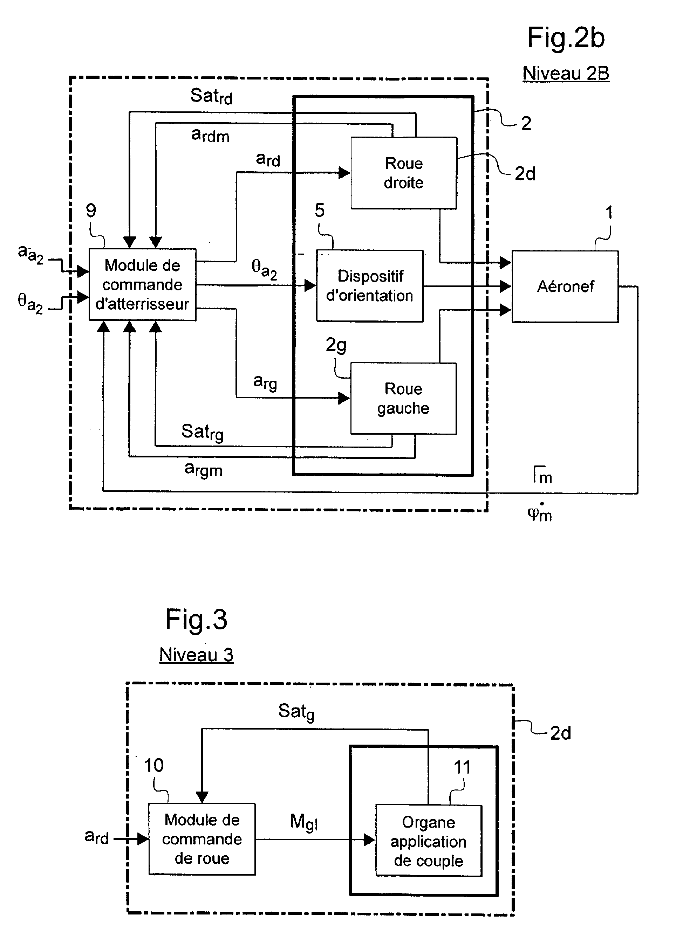

En référence à la figure 2b, le niveau 2B (ou niveau atterrisseur à partie basse orientable) est illustré en application à l'atterrisseur auxiliaire 2.

Au niveau 2B, identiquement au module de commande d'atterrisseur 8 du niveau 2A, un module de commande d'atterrisseur 9 détermine, à partir de la consigne d'accélération d'atterrisseur $a_{a2}$, une consigne d'accélération de roue $a_{rd}$, $a_{rg}$ pour chacune des roues 2d, 2g de l'atterrisseur auxiliaire 2 de sorte que l'ensemble des consignes d'accélération de roue $a_{rd}$, $a_r$ correspondent à la consigne d'accélération d'atterrisseur $a_{a2}$.

Un signal de saturation $Sat_{rd}$, $Sat_{rg}$ est envoyé par la roue droite 2d ou par la roue gauche 2g concernée au module de commande d'atterrisseur 9 si une ou plusieurs roues ne peut générer qu'une accélération limitée empêchant de réaliser la consigne d'accélération de roue correspondante, le module de commande d'atterrisseur 9 tenant alors compte de cette saturation pour déterminer les consignes d'accélération de roue $a_{rd}$, $a_{rg}$ permettant de s'approcher au mieux de la consigne d'accélération d'atterrisseur $a_{a2}$.

A tout instant du mouvement au sol de l'aéronef 1, des mesures de paramètres représentatifs du mouvement des roues sont effectuées, par exemple une mesure des vitesses de rotation des roues à partir desquelles sont estimées les accélérations $a_{rdm}$, $a_{rgm}$ de chacune des roues. A partir de ces estimations d'accélération de roue, le module de commande d'atterrisseur 9 détermine les consignes d'accélération de roue $a_{rd}$, $a_{rg}$ en tenant compte d'une erreur entre les consignes d'accélération de roue $a_{rd}$, $a_{rg}$ et les accélérations de roue estimées $a_{rdm}$, $a_{rgm}$.

Selon un mode de réalisation privilégié, le module de commande d'atterrisseur 9 acquiert également la vitesse angulaire mesurée $\dot{\varphi}_m$ et l'accélération longitudinale mesurée $\Gamma_m$ afin de déterminer les consignes d'accélération de roue $a_{rd}$, $a_{rg}$ en tenant compte du comportement de l'aéronef par rapport au mouvement au sol requis.

En outre, le module de commande d'atterrisseur 9 gère, simultanément aux accélérations des roues $a_{rd}$, $a_{rg}$, une orientation de la partie basse de l'atterrisseur auxiliaire 2. A cet effet, le module de commande d'atterrisseur 9 transmet la consigne d'angle de braquage d'atterrisseur $\theta_{a2}$ au dispositif d'orientation 5.

Selon l'invention, le train d'atterrissage est également commandé à un troisième niveau hiérarchique. En référence à la figure 3, le niveau 3 (ou niveau roue) est illustré en application à la roue droite 2d de l'atterrisseur auxiliaire 2. Chacune des roues du train d'atterrissage est commandée identiquement à la roue droite 2d de l'atterrisseur auxiliaire 2.

Un module de commande de roue 10 reçoit du niveau 2B, la consigne d'accélération d'atterrisseur $a_{rd}$, et en détermine une consigne de couple général $M_{g1}$ à engendrer par l'organe d'application de couple 11 associé à la roue 2d de sorte que la consigne de couple général $M_{g1}$ permette de répondre à la consigne d'accélération de roue $a_{rd}$.

L'ensemble des niveaux décrits sont hiérarchisés de telle façon que l'ensemble des couples appliqués aux roues par tous les organes d'application de couple en réponse aux consignes de couple général $M_{g1}$ et l'orientation de la partie basse de l'atterrisseur auxiliaire en réponse à la consigne d'angle de braquage $\theta_{a2}$ permettent à l'aéronef 1 de répondre à la consigne générale $(\Gamma_c, \dot{\varphi}_c)$.

Identiquement qu'au niveau 1, un signal de saturation Satg est envoyé par l'organe d'application de couple 11 au module de commande de roue 10 si l'organe d'application de couple 11 ne peut générer qu'un couple limité empêchant de réaliser la consigne de couple général $M_{g1}$. Le module de commande de roue 10 tient alors compte de cette saturation pour déterminer la consigne de couple général $M_{g1}$ permettant de s'approcher au mieux de la consigne d'accélération de roue $a_{rd}$.

Le niveau 3 de commande est ainsi indépendant du type d'organe d'application de couple 11 associée à la roue 2d ce qui permet l'utilisation du procédé pour tout type de technologie d'organe d'application.

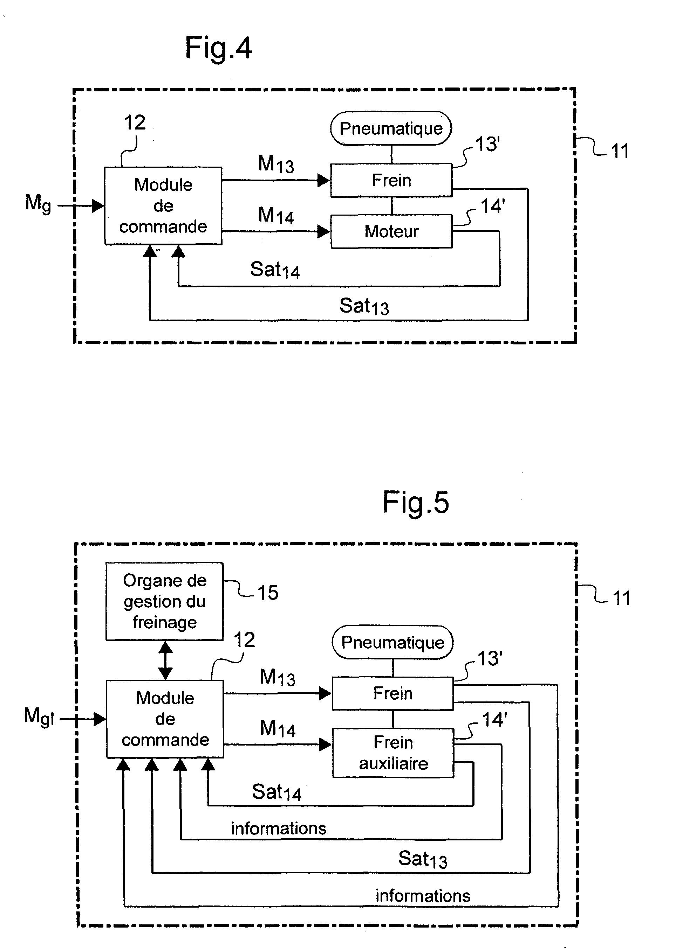

Selon l'invention, le train d'atterrissage est également commandé à un quatrième niveau hiérarchique. En référence à la figure 4, le niveau 4 (ou niveau organe d'application de couple) est illustré en application à l'organe de couple 11 de la roue 2d, l'organe d'application de couple 11 comportant ici deux composants : un frein à friction 13 et un moteur 14. Ici, chacun des organes d'application de couple du train d'atterrissage est commandé identiquement à l'organe d'application de couple 11 de la roue 2d.

De façon connue en soi, le frein à friction 13 et le moteur 14 de l'organe d'application de couple 11 sont commandés par un module de commande 12. A partir de la consigne de couple général $M_{g1}$, le module de commande 12 détermine pour chacun des composants 13, 14 de l'organe d'application de couple 11, une consigne unitaire de couple $M_{13}$, $M_{14}$ de sorte que l'ensemble des consignes unitaires de couple $M_{13}$, $M_{14}$ correspondent à la consigne de couple général $M_{g1}$.

Identiquement qu'aux niveaux précédents, un signal de saturation $Sat_{13}$, $Sat_{14}$ est envoyé par l'un des composants de l'organe d'application de couple 11 au module de commande 12 si ledit composant ne peut générer qu'un couple limité empêchant de réaliser la consigne de couple général $M_{g1}$. Le module de commande 12 tient alors compte de cette saturation pour déterminer des consignes unitaires de couple $M_{13}$, $M_{14}$ permettant de s'approcher au mieux de la consigne de couple général $M_{g1}$ requise.

Selon un mode de réalisation privilégié, en référence à la figure 5, le niveau 4 (ou niveau organe d'application de couple) est illustré en application à l'organe de couple 11 comportant deux composants : un frein à friction 13' et un frein auxiliaire 14' qui assure un freinage auxiliaire par une dissipation d'énergie autre que la friction. L'organe d'application de couple 11 comporte alors un organe de gestion du freinage 15 assurant, lors d'un freinage de la roue 2d, la répartition du freinage entre le frein à friction 13' et du frein auxiliaire 14'. À cet effet, lors d'une consigne d'accélération de roue $a_{rd}$ négative, c'est-à-dire lors d'une consigne de freinage de la roue 2d, l'unité de gestion du freinage 15 acquiert, par l'intermédiaire du module de commande 12, des informations représentatives de paramètres de freinage du frein à friction 13' et du frein auxiliaire 14' comme par exemple la température du frein à friction 13' ou du frein auxiliaire 14'. À partir de ces informations, l'unité de gestion du freinage 15 détermine si la roue 2d est dans une situation de freinage pour laquelle le frein à friction 13' n'est pas indispensable pour assurer le freinage demandé. L'unité de gestion de freinage 15 communique alors avec le module de commande 12 pour déterminer les consignes unitaires de couple $M_{13}$, $M_{14}$ de sorte à privilégier un actionnement du frein auxiliaire 14' tant que la roue 2d reste dans ladite situation de freinage, en n'actionnant le frein à friction 13' que si la roue 2d sort de ladite situation de freinage. Ainsi, l'organe de gestion du freinage 15 permet notamment de minimiser l'usure des éléments de friction.

Bien entendu l'invention n'est pas limitée au mode de mise en oeuvre décrit et on peut y apporter des variantes de réalisation sans sortir du cadre de l'invention tel que défini par les revendications.

Bien que l'on ait indiqué que l'aéronef 1 comportait un atterrisseur auxiliaire à l'avant 2 et deux atterrisseurs principaux à l'arrière 3,4, les atterrisseurs pourront bien entendu avoir une toute autre disposition. En outre, l'aéronef 1 pourra comporter un tout autre nombre d'atterrisseurs et chaque atterrisseur pourra comporter un tout autre nombre de roues. Par ailleurs, l'aéronef 1 pourra comporter un tout autre nombre d'atterrisseur dont la partie basse est orientable et un tout autre nombre de roues associées à un organe d'application de couple. De plus, chaque organe d'application de couple pourra comporter un nombre d'éléments et un type d'éléments différents de ceux illustrés. On pensera par exemple à équiper l'organe d'application de couple uniquement d'un frein à friction. On pourra également remplacer le frein à friction par un frein hydraulique. On rappelle qu'un des intérêts de l'invention est sa grande adaptabilité à la configuration de l'aéronef.

En particulier, bien qu'ici le procédé permet de gérer de façon simultanée à la fois l'orientation de la partie basse de l'atterrisseur auxiliaire 2, le différentiel de vitesses de rotation des atterrisseurs principaux 3, 4 ainsi que l'accélération longitudinale de chacun des atterrisseurs 2, 3, 4, le procédé selon l'invention pourra gérer uniquement le différentiel de vitesses de rotation des atterrisseurs principaux 3, 4 et leur accélération longitudinale.

En particulier, bien qu'ici le pilote agit sur différents organes de pilotage pour générer la consigne générale ($\Gamma_c$, $\dot{\varphi}_c$ ), l'une ou l'autre des deux composantes de la consigne générale pourra bien entendue être nulle selon le mouvement au sol que le pilote souhaite faire réaliser à l'aéronef 1. En outre, en utilisant ici le terme d'accélération/vitesse, on entend tout aussi bien une accélération/vitesse positive qu'une accélération négative/vitesse, l'accélération négative étant également nommée décélération.

### Revendications

1. Procédé de gestion d'un mouvement au sol d'un aéronef (1), l'aéronef comportant au moins un atterrisseur principal gauche (3) et un atterrisseur principal droit (4) qui comportent chacun des roues (3d,3g,9d,4g) associées à des organes d'application de couple (11) pour appliquer un couple sur les roues en réponse à une consigne générale, la consigne générale se décomposant en une consigne d'accélération longitudinale $\Gamma_c$ et une consigne de vitesse angulaire ($\dot{\varphi}_c$), le procédé étant **caractérisé en ce qu'**il comporte les étapes successives de :

   - à partir de la consigne générale ($\Gamma_c$, $\dot{\varphi}_c$), déterminer pour chacun des atterrisseurs une consigne d'accélération d'atterrisseur ($a_{a3}$, $a_{a4}$) de sorte que l'ensemble des consignes d'accélération d'atterrisseur $a_{a3}$, $a_{a4}$ permettent de répondre à la consigne générale ($\Gamma_c$, $\dot{\varphi}_c$) ;
   - pour chacun des atterrisseurs, déterminer à partir de la consigne d'accélération d'atterrisseur ($a_{a3}$, $a_{a4}$) et pour chacune des roues dudit atterrisseur, une consigne d'accélération de roue ($a_{rd}$, $a_{rg}$) de sorte que l'ensemble des consignes d'accélération de roue ($a_{rd}$, $a_{rg}$) correspondent à la consigne d'accélération d'atterrisseur ($a_{a3}$, $a_{a4}$) ;
   - pour chacune des roues, déterminer à partir de la consigne d'accélération de roue ($a_{rd}$, $a_{rg}$) une consigne de couple général ($M_{gl}$) à engendrer par l'organe d'application de couple associé à ladite roue de sorte que la consigne de couple général ($M_{gl}$) permette de répondre à la consigne d'accélération de roue ($a_{rd}$, $a_{rg}$), et de sorte que l'ensemble des couples appliqués aux roues par les organes d'application de couple en réponse aux consignes de couple général ($M_{gl}$) permettent à l'aéronef de répondre à la consigne générale ($F_c$, $\dot{\varphi}_c$).

2. Procédé selon la revendication 1, appliqué à un aéronef (1) dont au moins l'un des organes d'application de couple (11) comporte au moins deux composants, le procédé comportant l'étape de déterminer à partir de la consigne de couple général ($M_{gl}$) et pour chacun des composants (13,14) dudit organe d'application de couple, une consigne unitaire de couple de sorte ($M_{13}$, $M_{14}$) que l'ensemble des consignes unitaires de couple- ($M_{13}$, $M_{14}$) correspondent à la consigne de couple général ($M_{gl}$).

3. Procédé selon la revendication 1 ou 2, appliqué à un aéronef comportant en outre un ou plusieurs atterrisseurs (2) qui comportent chacun un dispositif d'orientation (5) pour orienter une partie basse de l'atterrisseur en réponse à la consigne de vitesse angulaire ($\dot{\varphi}_c$), le procédé comportant l'étape de, à partir de la consigne de vitesse angulaire ($\dot{\varphi}_c$), déterminer pour chacun des atterrisseurs dont la partie basse est orientable une consigne d'angle de braquage d'atterrisseur ($\theta_{a2}$) de sorte que l'ensemble des consignes d'angle de braquage d'atterrisseur ($\theta_{a2}$) et l'ensemble des consignes d'accélération d'atterrisseur ($a_{a3}$, $a_{a4}$) permettent de répondre à la consigne générale ($\Gamma_c$, $\dot{\varphi}_c$).

4. Procédé selon la revendication 1, appliqué à un aéronef (1) dont au moins un organe d'application de couple (11) comporte au moins un frein à friction (13') et un frein auxiliaire (14') qui assure une dissipation d'énergie par d'autres moyens que la friction, le procédé comportant les étapes de :

   - lors d'une consigne d'accélération de roue négative ($a_{rd}$, $a_{rg}$), c'est-à-dire lors d'une consigne de freinage de ladite roue, en fonction de paramètres de freinage du frein à friction et du frein auxiliaire, déterminer si la roue est dans une situation de freinage pour laquelle le frein à friction n'est pas indispensable pour générer la consigne de freinage,

- générer la consigne de freinage en privilégiant un actionnement du frein auxiliaire tant que la roue reste dans ladite situation de freinage, en n'actionnant le frein à friction que si la roue sort de ladite situation de freinage.

**Patentansprüche**

1. Verfahren zum Steuern einer Bewegung eines Flugzeugs (1) am Boden, wobei das Flugzeug mindestens ein linkes Hauptfahrwerk (3) und ein rechtes Hauptfahrwerk (4) umfasst, die jeweils Räder (3d, 3g, 4d, 4g) umfassen, die mit Organen (11) zum Aufbringen eines Drehmoments verbunden sind, um ein Drehmoment auf die Räder in Antwort auf einen Gesamtsollwert aufzubringen, wobei sich der Gesamtsollwert in einen Längsbeschleunigungs-Sollwert $\Gamma_c$ und einen Winkelgeschwindigkeits-Sollwert ($\dot{\varphi}_c$) unterteilt, wobei das Verfahren **dadurch gekennzeichnet ist, dass** es die aufeinander folgenden Schritte umfasst:

   - ausgehend von dem Gesamtsollwert ($\Gamma_c, \dot{\varphi}_c$) Bestimmen eines Fahrwerkbeschleunigungs-Sollwertes ($a_{a3}, a_{a4}$) für jedes Fahrwerk, derart, dass die Gesamtheit der Fahrwerkbeschleunigungs-Sollwerte ($a_{a3}, a_{a4}$) ein Ansprechen auf den Gesamtsollwert ($\Gamma_c, \dot{\varphi}_c$) ermöglicht,
   - für jedes der Fahrwerke, ausgehend von dem Fahrwerkbeschleunigungs-Sollwert ($a_{a3}, a_{a4}$) und für jedes der Räder des genannten Fahrwerks Bestimmen eines Radbeschleunigungs-Sollwertes ($a_{rd}, a_{rg}$), derart, dass die Gesamtheit der Radbeschleunigungs-Sollwerte ($a_{rd}, a_{rg}$) dem Fahrwerkbeschleunigungs-Sollwert ($a_{a3}, a_{a4}$) entspricht,
   - Bestimmen für jedes der Räder ausgehend von dem Radbeschleunigungs-Sollwert ($a_{rd}, a_{rg}$) eines von dem mit dem genannten Rad verbundenen Organ zum Aufbringen eines Drehmoments zu erzeugenden Gesamtdrehmoment-Sollwertes ($M_{gl}$), derart, dass der Gesamtdrehmoment-Sollwert ($M_{gl}$) ein Ansprechen auf den Radbeschleunigungs-Sollwert ($a_{rd}, a_{rg}$) ermöglicht, und derart, dass die Gesamtheit der von den Organen zum Aufbringen eines Drehmoments in Antwort auf die Gesamtdrehmoment-Sollwerte ($M_{gl}$) auf die Räder aufgebrachten Drehmomente dem Flugzeug ermöglicht, auf den Gesamtsollwert ($\Gamma_c, \dot{\varphi}_c$) anzusprechen.

2. Verfahren nach Anspruch 1, angewandt bei einem Flugzeug (1), bei dem mindestens eines der Organe (11) zum Aufbringen eines Drehmoments mindestens zwei Bauteile umfasst, wobei das Verfahren den Schritt umfasst: ausgehend von dem Gesamtdrehmoment-Sollwert ($M_{gl}$) und für jedes der Bauteile (13, 14) des genannten Organs zum Aufbringen eines Drehmoments Bestimmen eines Einzel-Drehmoment-Sollwertes ($M_{13}, M_{14}$), derart, dass die Gesamtheit der Einzel-Drehmoment-Sollwerte ($M_{13}, M_{14}$) dem Gesamtdrehmoment-Sollwert ($M_{gl}$) entspricht.

3. Verfahren nach Anspruch 1 oder 2, angewandt bei einem Flugzeug, das ferner ein oder mehrere Fahrwerke (2) umfasst, die jeweils eine Ausrichtungsvorrichtung (5) umfassen, um einen unteren Abschnitt des Fahrwerks in Antwort auf den Winkelgeschwindigkeits-Sollwert ($\dot{\varphi}_c$) auszurichten, wobei das Verfahren den Schritt umfasst: ausgehend von dem Winkelgeschwindigkeits-Sollwert ($\dot{\varphi}_c$) Bestimmen für jedes der Fahrwerke, dessen unterer Abschnitt ausrichtbar ist, eines Fahrwerkeinschlagwinkel-Sollwertes ($\theta_{a2}$), derart, dass die Gesamtheit der Fahrwerkeinschlagwinkel-Sollwerte ($\theta_{a2}$) und die Gesamtheit der Fahrwerkbeschleunigungs-Sollwerte ($a_{a3}, a_{a4}$) ein Ansprechen auf den Gesamtsollwert ($\Gamma_c, \dot{\varphi}_c$) ermöglichen.

4. Verfahren nach Anspruch 1, angewandt bei einem Flugzeug (1), bei dem mindestens ein Organ (11) zum Aufbringen eines Drehmoments mindestens eine Reibungsbremse (13') und eine Hilfsbremse (14') umfasst, die eine Dissipation von Energie durch andere Mittel als Reibung gewährleistet, wobei das Verfahren die Schritte umfasst:

   - bei einem negativen Radbeschleunigungs-Sollwert ($a_{rd}, a_{rg}$), d.h. bei einem Brems-Sollwert des genannten Rades, in Abhängigkeit von Bremsparametern der Reibungsbremse und der Hilfsbremse Bestimmen, ob das Rad in einer Bremssituation ist, für die die Reibungsbremse nicht notwendig ist, um den Brems-Sollwert zu erzeugen,
   - Erzeugen des Brems-Sollwertes, indem eine Betätigung der Hilfsbremse begünstigt wird, solange das Rad in der genannten Bremssituation verbleibt, indem die Reibungsbremse nur betätigt wird, wenn das Rad die genannte Bremssituation verlässt.

**Claims**

1. A method of managing movement of an aircraft (1) on the ground, the aircraft having at least one left main undercarriage (3) and at least one right main undercarriage (4), each having wheels (3d, 3g, 4d, 4g) associated with torque application members (11) for applying torque to the wheels in response to a general setpoint, the general setpoint comprising a longitudinal acceleration setpoint ($\Gamma_c$) and an angular speed setpoint ($\dot{\varphi}_c$), the method being **characterized in that** it comprises the successive steps of:

• from the general setpoint ($\Gamma_c$, $\dot{\varphi}_c$), determining for each of the undercarriages an undercarriage acceleration setpoint ($a_{a3}$, $a_{a4}$) in such a manner that the undercarriage acceleration setpoints ($a_{a3}$, $a_{a4}$) together enable the general setpoint ($\Gamma_c$, $\dot{\varphi}_c$) to be satisfied;
• for each of the undercarriages, determining from the undercarriage acceleration setpoint ($a_{a3}$, $a_{a4}$) and for each of the wheels of said undercarriage, a wheel acceleration setpoint ($a_{rd}$, $a_{rg}$) in such a manner that the wheel acceleration setpoints ($a_{rd}$, $a_{rg}$) together correspond to the undercarriage acceleration setpoint ($a_{a3}$, $a_{a4}$); and
• for each of the wheels, determining from the wheel acceleration setpoint ($a_{rd}$, $a_{rg}$) a general torque setpoint ($M_{gl}$) for the torque to be generated by the torque application member associated with said wheel in such a manner that the general torque setpoint ($M_{gl}$) enables the wheel acceleration setpoint ($a_{rd}$, $a_{rg}$) to be satisfied, and in such a manner that the torques applied to the wheels by the torque application members in response to the general torque setpoints ($M_{gl}$) together enable the aircraft to satisfy the general setpoint ($\Gamma_c$, $\dot{\varphi}_c$).

2. A method according to claim 1, applied to an aircraft (1) in which at least one of the torque application members (11) includes at least two components, the method including the step of determining from the general torque setpoint ($M_{gl}$) and for each of the components (13, 14) of said torque application member, an individual torque setpoint ($M_{13}$, $M_{14}$) in such a manner that the individual torque setpoints ($M_{13}$, $M_{14}$) together correspond to the general torque setpoint ($M_{gl}$).

3. A method according to claim 1 or claim 2, applied to an aircraft further including one or more undercarriages (2), each of which includes a steering device (5) for steering the bottom portion of the undercarriage in response to the angular speed setpoint ($\dot{\varphi}_c$), the method including the step of responding to the angular speed setpoint ($\dot{\varphi}_c$) to determine for each of the undercarriages having a steerable bottom portion an undercarriage steering angle setpoint ($\theta_{a2}$) in such a manner that the undercarriage steering angle setpoint ($\theta_{a2}$) and the undercarriage acceleration setpoints ($a_{a3}$, $a_{a4}$) together enable the general setpoint ($\Gamma_c$, $\dot{\varphi}_c$) to be satisfied.

4. A method according to claim 1, applied to an aircraft (1) in which at least one torque application member (11) includes at least a friction brake (13') and at least an auxiliary brake (14') that dissipates energy by means other than friction, the method including the steps of:

• when a wheel acceleration setpoint ($a_{rd}$, $a_{rg}$) is negative, i.e. when there is a setpoint for braking said wheel, acting as a function of braking parameters of the friction brake and of the auxiliary brake to determine whether the wheel is in a braking situation in which the friction brake is not essential for generating the braking setpoint;
• while giving priority to actuating the auxiliary brake so long as the wheel remains within said braking situation, and actuating the friction brake only if the wheel departs from said braking situation.

**Fig.1**
Niveau 1

**Fig.2a**
Niveau 2A

## Fig.2b

Niveau 2B

## Fig.3

Niveau 3

# Fig.4

# Fig.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006134257 A